# EUROPÄISCHE PATENTSCHRIFT

(11) **EP 1 922 269 B1**
(45) Veröffentlichungstag und Bekanntmachung des Hinweises auf die Patenterteilung: **24.11.2010**
(21) Anmeldenummer: 06805672.0
(22) Anmeldetag: 08.09.2006
(51) Int. Cl.: B65G 15/14, B65G 19/02, B29C 49/42

(54) **VORRICHTUNG ZUM TRANSPORTIEREN VON GEGENSTÄNDEN**
DEVICE FOR CONVEYING OBJECTS
DISPOSITIF POUR TRANSPORTER DES OBJETS

(30) Priorität: 09.09.2005 DE 102005043282; 15.08.2006 DE 102006038320
(43) Veröffentlichungstag der Anmeldung: 21.05.2008
(60) Teilanmeldung: 10001941.3
(73) Patentinhaber: SIDEL PARTICIPATIONS, S.A.S., 76930 Octeville-sur-Mer (FR)
(72) Erfinder: KLAIBER, Franz, 78564 Wehingen (DE); NOVAK, Peter, CH-8274 Tägerwilen (CH)
(74) Vertreter: Weiss, Peter
(86) Internationale Anmeldenummer: PCT/EP2006/008772
(87) Internationale Veröffentlichungsnummer: WO 2007/028627

(56) Entgegenhaltungen:
- EP-A1- 0 842 875
- EP-A2- 0 805 117
- WO-A-01/85580
- WO-A-97/10163
- DE-A1- 3 515 353
- DE-U1- 20 110 929
- JP-A- 11 001 212
- US-A1- 5 875 880
- US-B1- 6 514 015

## Beschreibung

Die Erfindung betrifft eine Vorrichtung zum Transportieren von Gegenständen mit einer Profilierung nach dem Oberbegriff des Anspruchs 1.

### Stand der Technik

Eine Vielzahl von Gegenständen müssen heute von einer Bearbeitungsstation zur nächsten oder zur Verpackung transportiert werden. Dies gilt beispielsweise für Flaschen, die auf ihrem Transport noch gefüllt oder etikettiert werden. Vor allem gilt dies aber für Vorformlinge (Preforms), die in einer Spritzglessmaschine hergestellt und dann in einer Blasformvorrichtung zu einer Flasche aufgeblasen werden. Diese Vorformlinge besitzen einen Ringkragen, der im wesentlichen zur Handhabung der Vorformlinge und späteren Flaschen dient. Der Ringkragen ist nahe unterhalb der Flaschenöffnung vorgesehen und begrenzt in der Regel auch das Gewinde für das Aufschrauben eines Schraubverschlusses.

Für den Transport von Flaschen sind beispielsweise aus der DE 35 15 353 A1 Scharnierketten, Flachriemen, Rundprofilschnüren od. dgl. bekannt, weiche den Ringkragen untergreifen und so den Transport bewirken.

In der EP 0 842 875 A1 wird der Ringkragen von je einem Paar von Endlosschnüren über- bzw. untergriffen.

Nach der heutigen Technik werden die im Spritzgiesswerkzeug hergestellten Vorformlingen in komplizierten und viel Platz beanspruchenden Anlagen geordnet und zu der Blasformeinrichtung transportiert. Neu ist es, diese Vorformlinge in einem zentrifugenartigen Separator zu vereinzeln, wie er beispielsweise in der PCT/EP2006/050682 beschrieben ist.

Einen Stand der Technik zur vorliegenden Anmeldung stellt die WO 97/10163 dar. Darin wird eine Methode und eine Vorrichtung zum Transport von Behältern beschrieben. Bei diesen Behältern handelt es sich um Plastikflaschen, die einen Ringkragen aufweisen, der von einer Gleitleiste untergriffen wird. Zusätzlich wird der Transport der Flaschen über Bewegungselemente, die kamm- oder zahnförmig ausgeführt sind, im Bereich des Gewindes unterstützt. Nachteilig an dieser Ausführungsform ist, dass zum Transport der Flaschen zusätzlich eine relativ aufwendige Vorrichtung mitbewegt werden muss.

Die EP 0 805 117 A2 offenbart den Oberbegriff des Anspruchs 1.

### Aufgabe

Aufgabe der vorliegenden Erfindung ist es, eine geeignete Vorrichtung der oben genannten Art zur Verfügung zu stellen, mit der die Gegenstände, speziell die Vorformlinge, geordnet und sicher von der einen zur nächsten Station transportiert werden können.

### Lösung der Aufgabe

Diese Aufgabe wird durch die Vorrichtung des Anspruchs 1 und durch die Verwendung einer Vorrichtung gemäß Anspruch 13 oder 14 gelöst. Wesentlichster Vorteil dieser nachgiebigen Halterung der Gegenstände ist, dass sowohl die Möglichkeit des Transportes als auch des Stauens besteht. Dies ist für die praktische Anwendung der Vorrichtung von grosser Wichtigkeit. Ferner besteht auch die Möglichkeit der Erzeugung eines Staudrucks.

Die Behälter, die transportiert werden, weisen vorzugsweise einen Rumpf, einen Ringkragen und eine Mündung auf, und sie sind vorzugsweise PET-Flaschen bzw. PET-Vorformlinge. Zur Unterstützung und zum Transport der Behälter sind Unterstützungsmittel und Transporteinrichtungen vorgesehen, wobei die Unterstützungsmittel vorzugsweise ortsfest angebracht sind. Die Unterstützungsmittel können z.B. von Kunststoff- oder Metallleisten gebildet werden. Das Unterstützungsmittel kann aber nicht nur als Leiste ausgebildet sein, vielmehr ist eine beliebige Ausgestaltung, wie z.B. in der Art eines mit kreisrundem Querschnitt versehenen Bandes möglich.

Die mindestens eine Transporteinrichtung ist vorzugsweise für den Hauptenergieeintrag in die Behälter zur Vorwärtsbewegung in Transportrichtung zuständig. Das Unterstützungsmittel und die Transporteinrichtung greifen vorzugsweise unterhalb bzw. oberhalb des Ringkragens ein. Eine den Ringkragen berührende Ineingriffnahme der Unterstützungsmittel bzw. Transporteinrichtung ist genauso denkbar, wie eine mit leichtem Abstand zum Ringkragen durchgeführte Ineingriffnahme.

Die mindestens eine Transporteinrichtung ist vorzugsweise als ein endlos umlaufendes Trum ausgebildet, an dem Federelemente angebracht sind. Durch Zusammenwirken der Federelemente mit einem Unterstützungsmittel oder mit Federelementen anderer Transporteinrichtungen ergibt sich eine klemmende Erfassung der Behälter im Bereich des Ringkragens.

Gemäss einer bevorzugten Weiterbildung der Erfindung sind die Unterstützungsmittel unbeweglich und die Transporteinrichtung in Transportrichtung beweglich angebracht, wobei weiter bevorzugt zwei Unterstützungsmittel und zwei Transporteinrichtungen vorhanden sind. Vorzugsweise werden die Behälter hängend so transportiert, dass die Unterstützungsmittel parallel tangential unterhalb dem Ringkragen eingreifen, während die beiden Transporteinrichtungen tangential parallel oberhalb des Ringkragens angebracht sind. Es liegt aber auch im Bereich der Erfindung, dass drei Unterstützungsmittel vorhanden sind, die den Behälter in einer bestimmten Lage halten, währenddessen eine Transporteinrichtung für die Vorwärtsbewegung in Transportrichtung sorgt.

Weiterhin ist es möglich, insgesamt nur drei Unterstützungs- bzw. Transporteinrichtungen vorzusehen. Dabei können entweder zwei Unterstützungs- und eine Transporteinrichtung oder zwei Transporteinrichtungen und ein Unterstützungsmittel vorgesehen sein. Bei vier zur Verfügung stehenden Angriffsmöglichkeiten über bzw. unterhalb des Ringkragens des Vorformlings und links und rechts desselben bleibt bei der Verwendung von drei Unterstützungsmittel bzw. Transporteinrichtungen eine Angriffsstelle frei, wobei es völlig unerheblich ist, ob die freie Stelle links, rechts, oben oder unten ist.

Gemäss der Erfindung soll zumindest ein Teil der Transporteinrichtung, welches dem Gegenstand reibschlüssig anliegen, sich gegen Druckrollen abstützen und diese Druckrollen nachgiebig gelagert sein. Hierdurch wird ein sicherer Transport der Vorformlinge gewährleistet. Erfindungsgemäß sind die Druckrollen an Federzungen, Blattfedern, Federbügel od.dgl. gelagert, die vorgespannt sind.

In einem Ausführungsbeispiel der Erfindung können dem zu transportierenden Gegenstand beidseitig Endlosriemen, bevorzugt Endlosrundriemen, zugeordnet werden, zwischen denen dann der zu transportierende Gegenstand eingeklemmt ist. Durch die Wahl von im Querschnitt runden Endlosriemen findet keine Änderung der Angriffspunkte an den Gegenständen statt, gleichgültig in welcher Lage die Vorformlinge transportiert werden.

Diese Endlosriemen umschlingen beabstandet angeordnete Umlenkrollen, die bevorzugt kippbar sind, sodass durch Veränderung der Lage der Umlenkrollen Vorformlinge nicht nur hängend, sondern auch waagrecht oder sogar senkrecht aufstehend transportiert werden können, je nach Wunsch. Hier hilft zusätzlich noch ein Niederhalter, an dem die Vorformlinge anschlagen bzw. anliegen. Das heisst, die Vorformlinge können in jeder beliebigen Lage und ungetaktet transportiert werden, was bei den bislang bekannten Vorrichtungen nicht möglich war. Zum Beispiel war bislang kein Transport und Staudruckerzeugung von Vorformlingen von unten nach oben möglich. Mit der erfindungsgemässe Vorrichtung ist dies machbar.

Selbstverständlich müssen auch die Gleitebenen bzw. Unterstützungsmittel der gewünschten Transportbahn angepasst werden. Auf diese Weise ist jede beliebige Führung der Vorformlinge möglich. Dies hat zur Folge, dass die räumliche Ausrichtung der Vorformlinge einem Einlauf an einer Blasmaschine unterschiedlichster Hersteller angepasst werden kann.

Speziell beim Transport von Vorformlingen aber auch von Flaschen besteht die Notwendigkeit, dass sich die Transportbahn in einer Ebene erstreckt. Verläuft die Transportbahn jedoch ansteigend bzw. abfallend und durchläuft dort unterschiedliche Steigungen, so gibt es positive und negative Steigungsbereiche, in denen sich der Abstand der Mittelachsen von aufeinander folgenden Gegenständen verringert bzw. erweitert. Verringert sich der Abstand, so weichen die aufeinander folgenden Gegenstände aus, benötigen mehr Platz und können sich verkeilen. Ferner reiben sie aneinander.

Um diesem Nachteil vorzubeugen, wird gemäss der vorliegenden Erfindung in einem Ausführungsbeispiel die Möglichkeit eröffnet, dass ein Auslenkelement in den Bereich der negativen Steigung in die Transportbahn der Gegenstände eingesetzt wird, sodass diese an einer Gleitfläche entlang gleiten und nach aussen gelenkt werden. Hierdurch wird der sich verringernde Abstand zwischen den Mittelachsen von aufeinander folgenden Vorformlingen wieder erhöht.

Denkbar ist auch, dass die Gleitebenen, auf denen die Ringkrägen der Vorformlinge entlang gleiten, in einzelnen Bereichen in unterschiedlichen Ebenen verlaufen. Hierdurch erfolgt ein Kippen der Vorformlinge, sodass diese ebenfalls seitlich ausgelenkt werden und der Abstand ihrer Mittelachsen wieder erhöht wird .

Denkbar ist auch das Anordnen von unterschiedlich geneigten Gleitebenen, die zudem noch versetzt in unterschiedlichen Höhen verlaufen können. Hier sind viele Möglichkeiten denkbar und sollen von der vorliegenden Erfindung umfasst sein.

Gerade die Möglichkeit, welche die vorliegenden Erfindung durch die unterschiedliche Anordnung der Gleitebenen bietet, lässt beispielsweise das Problem eines Negativbogens gar nicht erst entstehen. Die Vorformlinge können In beliebiger Lage ihrer Mittelachsen transportiert werden, sodass dem gewünschten Abstand der Mittelachsen durch Änderung der Lage der Vorformlinge im Raum Rechnung getragen werden kann.

Ein weiterer Gedanke der vorliegenden Erfindung bezieht sich vor allem darauf, dass der Abstand der Gleitbahnen zueinander veränderbar ist. Zu diesem Zweck sind die Gleitbahnen Teil eines Gehäuses, welches bevorzugt aus zwei Gehäuseschalen besteht. Die beiden Gehäuseschalen bilden im Bereich der Gleitbahnen einen Schlitz aus, wobei Randkanten einen gewünschten Abstand voneinander einhalten. Die Randkanten nehmen in Gebrauchslage zwischen sich die Vorformlinge auf.

Um nun diesen Abstand ändern zu können, sollen die beiden Gehäuseschalen ineinander verschiebbar sein, wozu sich beispielsweise zwei Schenkelstreifen der Gehäuseschalen überlappen und so überlappend miteinander verbunden werden können.

### FIGURENBESCHREIBUNG.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Schnittdarstellung in perspektivischer Ansicht eines Ausführungsbeispiels einer Vorrichtung zum Transportieren von Vorformlingen;
Figur 2 eine vergrössert dargestellte Seitenansicht aus einem Teilbereich der Vorrichtung gemäss Figur 1;
Figur 3 einen Querschnitt durch Figur 2 entlang Linie III - III;
Figur 4 einen Querschnitt durch Figur 2 entlang Linie IV - IV;
Figur 5 eine schematische Seitenansicht von Teilen der Vorrichtung gemäss Figur 3 in verschiedenen Anordnungen von Endlosriemen;
Figur 6 eine Seitenansicht eines Teilausschnitts aus einer Vorrichtung zur Transportlageänderung von Gegenständen ;
Figur 7 eine Draufsicht auf den Teilausschnitt gemäss Figur 6 ;
Figur 8 eine schematische Darstellung von verschiedenen Transportlagen von Vorformlingen ;
Figur 9 eine Schnittansicht von Teilen einer Vorrichtung zum Transportieren von Vorformlingen, die kein Teil der Erfindung ist;
Figur 10 eine Draufsicht auf die Teile der Vorrichtung gemäss Figur 9;
Figur 11 eine Seitenansicht eines Teils einer Transportstrecke nach dem Stand der Technik ;
Figur 12 eine Sicht in Transportrichtung der Vorformlinge mit weiteren Teilen einer Vorrichtung zum Transportieren dieser Vorformlinge;
Figur 13 eine Unteransicht auf den Teilbereich der Vorrichtung gemäss Figur 12;
Figur 14 eine Seitenansicht eines weiteren Ausschnitts aus einem weiteren Ausführungsbeispiel einer Vorrichtung zum Transportieren von Gegenständen;
Figur 15 eine perspektivische Ansicht des Teilbereichs gemäss Figur 14;
Figur 16 eine weitere perspektivische Ansicht eines weiteren Teilbereichs der Vorrichtung zum Transportieren von Gegenständen.

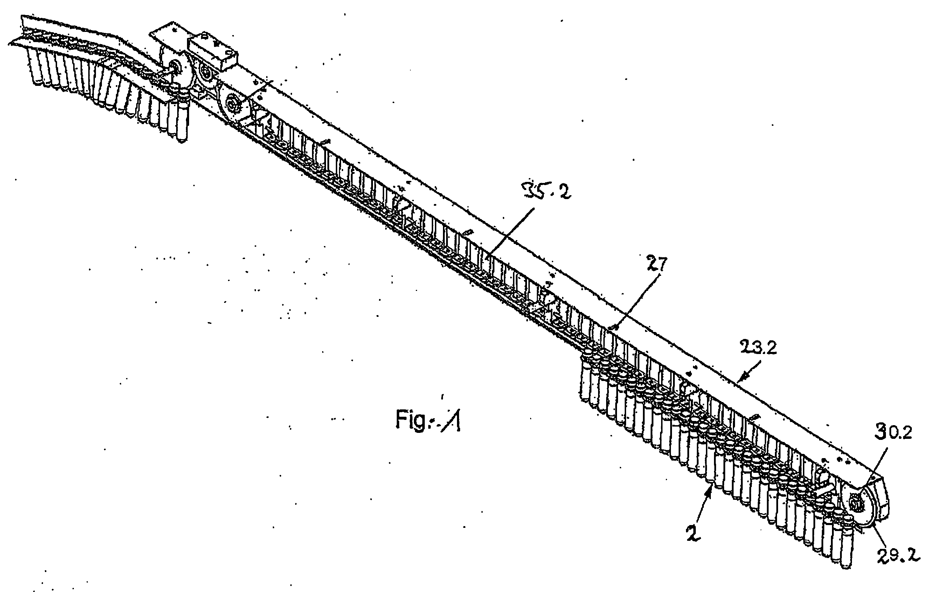

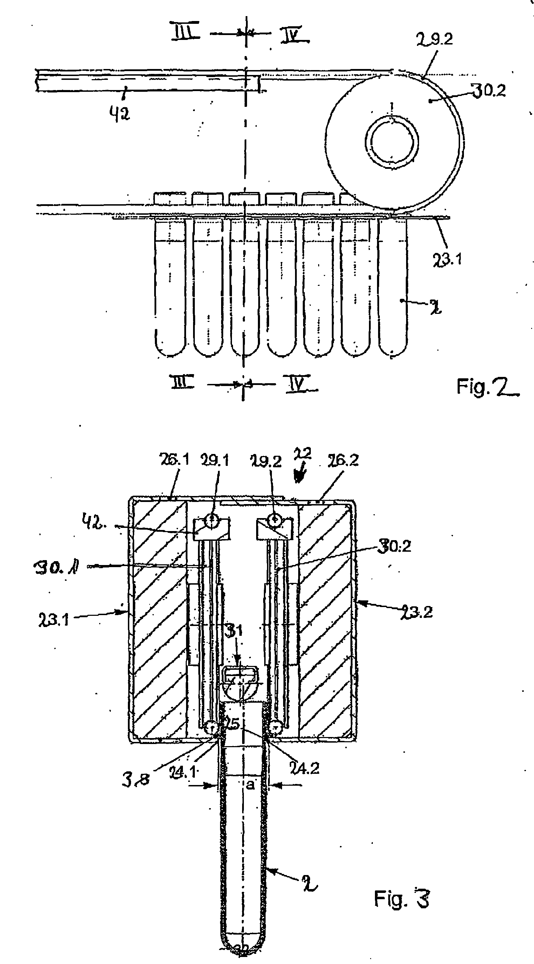

Eine erfindungsgemässe Vorrichtung zum Transportieren von Vorformlingen weist gemäss Figur 3 ein Gehäuse 22 auf, welches aus zwei Gehäuseschalen 23.1 und 23.2 gebildet ist. Die Gehäuseschalen 23.1 und 23.2 sind ineinander verschiebbar, sodass ein Abstand a von Randkanten 24.1 und 24.2, die einen Schlitz 25 zwischen sich ausbilden, verändert werden kann. Hierzu überlappen sich die beiden Gehäuseschalen 23.1 und 23.2 mit ihren oberen Schenkeln 26.1 und 26.2 und sind in diesem Überlappungsbereich durch nicht näher gezeigte Befestigungselemente, welche in Figur 1 gezeigte Langlöcher 27 durchsetzen, verbunden.

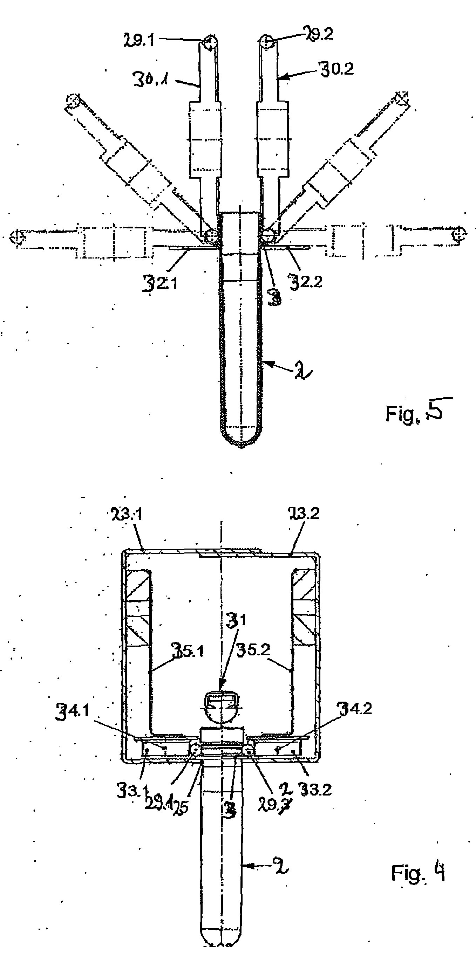

In dem Schlitz 25 gleiten die Vorformlinge 2, wobei sie mit einem Ringkragen 3 Gleitebenen 32.1, 32.2 (siehe Figur 5) seitlich anschliessend an die Randkanten 24.1 und 24.2 aufliegen.

Dem Transport der Vorformlinge 2 entlang dem Schlitz 25 in dem Gehäuse 22 dienen zwei beidseitig angeordnete Endlosriemen 29.1 und 29.2, die Umlenkrollen 30.1 und 30.2 umschlingen und in Kunststoffschienen 42 laufen. Dabei schmiegen sich die Endlosriemen 29.1 und 29.2 oberhalb des Ringkragens 3 eng an den Hals der Vorformlinge 2 an und nehmen die Vorformlinge 2 reibschlüssig mit. Damit die Vorformlinge 2 nicht nach oben ausweichen können, dient zusätzlich eine Schiene 31 als Niederhalter.

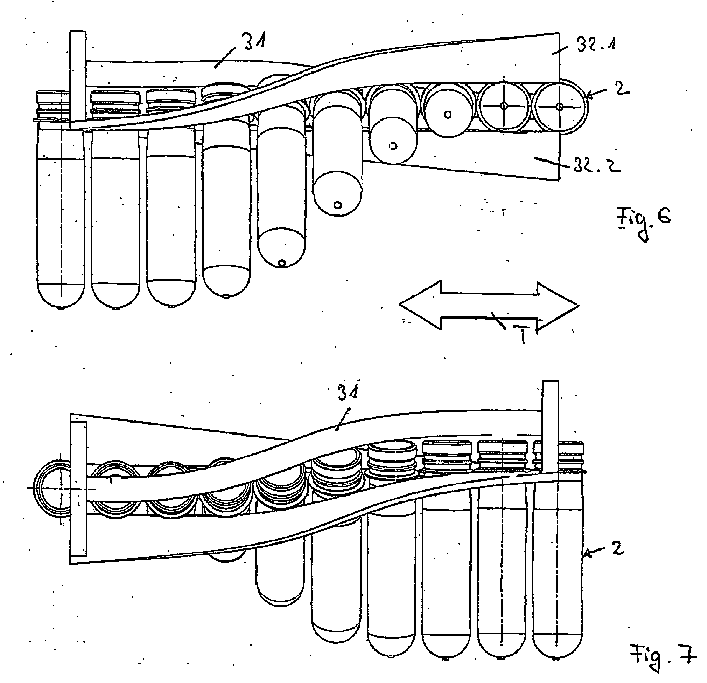

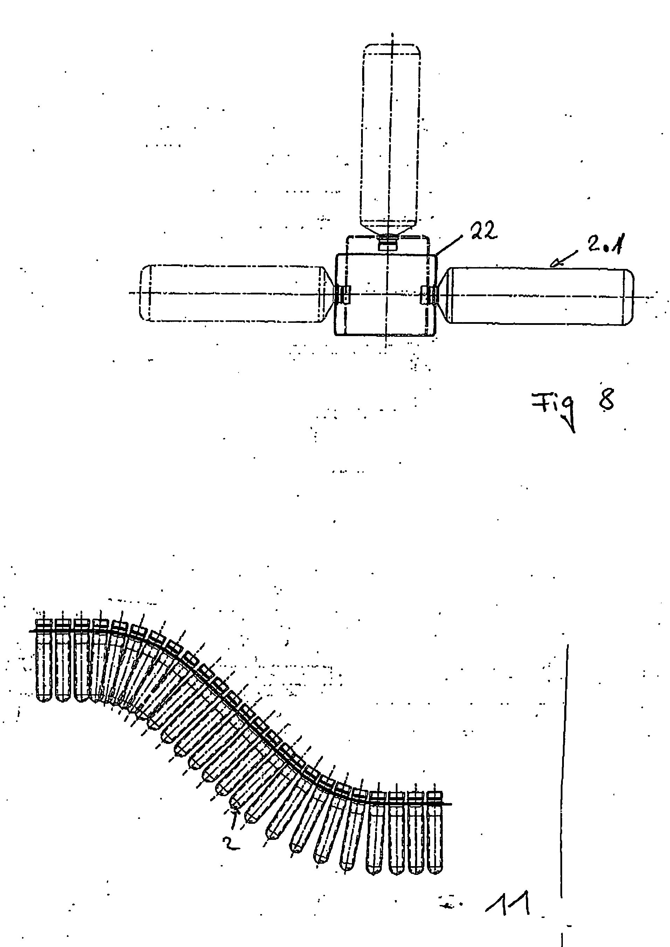

In Figur 5 sind die beiden Gleitebenen 32.1 und 32.2 angedeutet, auf denen der Ringkragen 3 entlang gleitet. Strichpunktiert sind aber weitere verschiedene Gebrauchslagen der Umlenkrollen 30.1 bzw. 30.2 angedeutet, sodass ersichtlich wird, dass die entsprechenden Endlosriemen 29.1 und 29.2 den Vorformling 2 in jeder gewünschten Position angreifen und weitertransportieren können, je nachdem welche Lage konstruktiv zu bevorzugen ist. Dies hängt vor allem auch davon ab, ob ein hängender Transport des Vorformlingen, ein waagrechter oder gar ein senkrechter Transport gewünscht wird. Die letzten beiden erwähnten Transportmöglichkeiten sind in Figur 8 angedeutet. In den Figuren 6 und 7 wird zudem gezeigt, dass durch die entsprechende Führung der Gleitebenen 32.1 und 32.2 ohne Schwierigkeiten ein Ausrichten der Vorformlinge von einer waagerechten Lage in einer hängenden Lage möglich ist. Dasselbe gilt natürlich auch für ein Ausrichten der Vorformlinge von einer hängenden in eine waagerechte Lage und von dort sogar in eine senkrechte Lage. All dies ist durch die erfindungsgemässen Transporteinrichtungen möglich.

Gemäss den Figuren 3 und 4 greifen die beiden Endlosriemen 29.1 und 29.2 die Vorformlinge 2 von je einer Seite her an, sodass die Vorformlinge 2 bei ihrem Transport durch den Schlitz 25 bewegt werden. Damit die Endlosriemen 29.1 und 29.2 in engem, das heisst in reibschlüssigem Kontakt mit den Vorformlingen 2 gelangen, sind seitliche Druckrollen 33.1 und 33.2 vorgesehen, die die Endlosriemen 29.1 und 29.2 federnd gegen den Hals des Vorformlings 2 oberhalb des Ringkragens 3 drücken. Diese Druckrollen 33.1 und 33.2 laufen mit den Endlosriemen 29.1 und 29.2. Dabei drehen sie um eine Drehachse 34.1 und 34.2, wobei sie jeweils an einer Federzunge 35.1 und 35.2 hängen, welche vorgespannt ist und die Druckrollen 33.1 und 33.2 gegen den Endlosriemen 29.1 und 29.2 drückt.

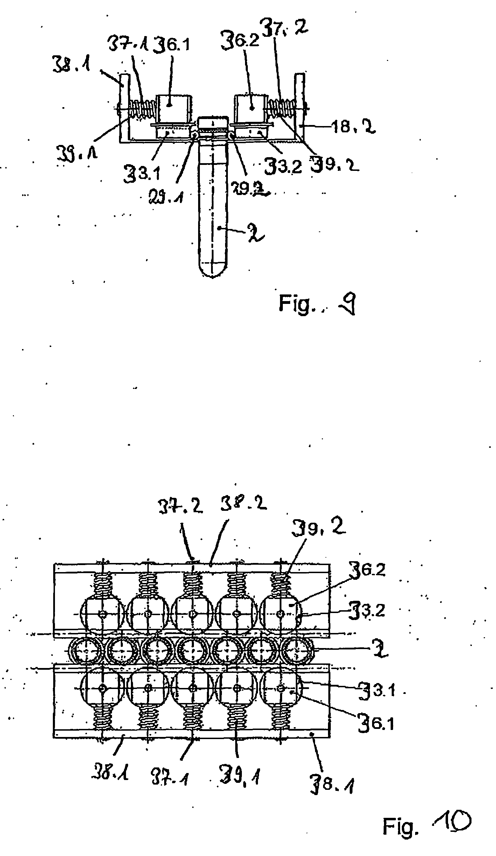

In den Figuren 9 und 10 wind eine Vorrichtung zum Transport von Vorformlingen, die kein Teil der Erfindung ist, gezeigt, wobei die Druckrollen 33.1 und 33.2 jeweils an einem Lagerblock 36.1 und 36.2 angeordnet sind, und wobei jeder Lagerblock 36.1 und 36.2 über einen Bolzen 37.1 und 37.2 an einer Wand 38.1 und 38.2 gehalten ist. Gegen diese Wand 38.1 und 38.2 stützt sich jeder Lagerblock 36.1 bzw. 36.2 über eine Schraubenfeder 39 ab, weiche den Bolzen 37.1 und 37.2 umschlingt. Diese Schraubenfeder 39 ist ebenfalls vorgespannt, sodass die Druckrollen 33.1 und 33.2 den Endlosriemen 29.1 und 29.2 gegen den Vorformling 2 drücken.

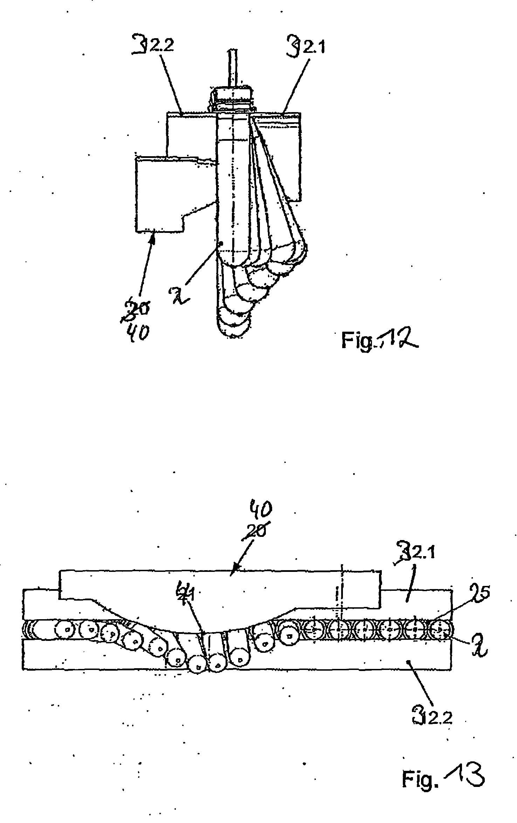

Erfindungsgemäss soll es bei der Vorrichtung zum Transport von Vorformlingen 2 auch möglich sein, mit den Vorformlingen eine kurvige Transportbahn zu durchlaufen. Werden beispielsweise die Vorformlinge hängend angeordnet, wie dies in Figur 11 gezeigt ist, und durchlaufen sie unterschiedliche Steigungen der Transportbahn, so werden positive und negative Steigungsbereiche durchlaufen, das heisst, in den positiven Steigungsbereichen beabstanden sich Mittelachsen benachbarter Vorformlinge mehr, während benachbarte Vorformlinge in den negativen Steigungsbereich in dem auf dem Ringkragen 28 folgenden Bereich gegeneinander gedrückt werden und sich gegenseitig ausweichen, so dass die Vorformlinge nicht mehr in einer Ebene geführt sind und verklemmen. Dies kann gemäss Figur 12 und 13 einmal dadurch vermieden werden, dass in dem Bereich des Schlitzes 25 ein Auslenkelement 40 mit einer gerundeten Gleitfläche 41 eingesetzt wird. Im Bereich dieser Gleitfläche 41 werden die Vorformlinge 2 ausgelenkt, sodass ihnen mehr Platz im Negativbogenbereich zur Verfügung steht und der Nachteil einer negativen Steigung aufgehoben wird.

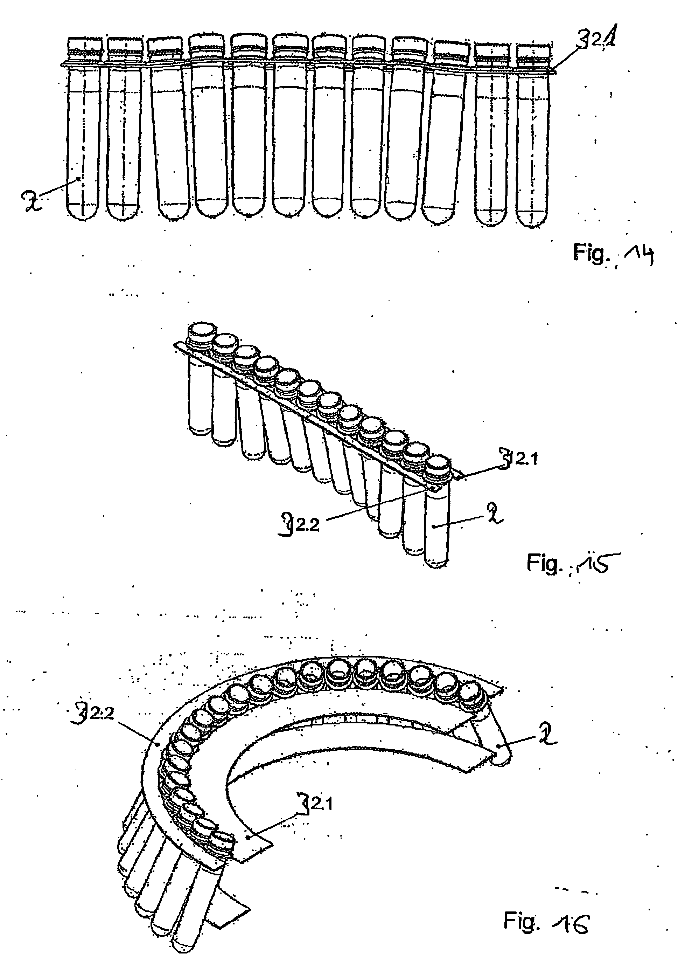

Eine andere Möglichkeit gemäss den Figuren 14 und 15 besteht darin, dass die Gleitebenen 32.1 und 32.2 abschnittsweise unterschiedliche Höhen durchlaufen, sodass die Vorformlinge 2 in diesem Bereich nach aussen gekippt werden.

Ferner besteht gemäss Figur 16 auch die Möglichkeit, die Gleitebene 32.1 und 32.2 geneigt in unterschiedlichen Höhen anzuordnen, sodass ebenfalls die Vorformlingen 2 nach aussen gekippt werden.

### Bezugszeichenliste

| | | | | | |
|---|---|---|---|---|---|
| 1 | | 34 | Drehachse | 67 | |
| 2 | Vorformling/Flaschen | 35 | Federzunge | 68 | |
| 3 | Ringkragen | 36 | Lagerblock | 69 | |
| 4 | | 37 | Bolzen | 70 | |
| 5 | | 38 | Wand | 71 | |
| 6 | | 39 | Schraubenfeder | 72 | |
| 7 | | 40 | Auslenkelement | 73 | |
| 8 | | 41 | Gleitfläche | 74 | |
| 9 | | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | A | Abstand |
| 16 | | 49 | | a | Abstand |
| 17 | | 50 | | N | Ringkragenebene |
| 18 | | 51 | | | |
| 19 | | 52 | | T | Transportrichtung |
| 20 | | 53 | | | |
| 21 | | 54 | | X | Richtung |
| 22 | Gehäuse | 55 | | | |
| 23 | Gehäuseschale | 56 | | γ | Winkel |
| 24 | Randkante | 57 | | | |
| 25 | Schlitz | 58 | | | |
| 26 | Schenkel | 59 | | | |
| 27 | Langloch | 60 | | | |
| 28 | Ringkragen | 61 | | | |
| 29 | Endlosriemen | 62 | | | |
| 30 | Umlenkrollen | 63 | | | |
| 31 | Niederhalter | 64 | | | |
| 32 | Gleitebene | 65 | | | |
| 33 | Druckrolle | 66 | | | |

## Patentansprüche

1. Vorrichtung zum Transportieren von Gegenständen mit einer Profilierung, insbesondere von Flaschen oder Vorformlingen (2) mit einem Ringkragen (28), zwischen Unterstützungsmittel oder zwei Gleitebenen (32.1, 32.2) mit Hilfe von zumindest einer Transporteinrichtung (21; 29.1, 29.2), von der zumindest ein Teil (29.1, 29.2) dem Gegenstand (2) reibschlüssig anliegt, wobei der dem Gegenstand (2) reibschlüssig anliegende Teil (29.1, 29.2) der Transporteinrichtung nachgiebig gelagert ist, indem sich die Transporteinrichtungen (29.1, 29.2) gegen federnd gelagerte Druckrollen (33.1, 33.2) abstützt,
**dadurch gekennzeichnet, dass**
die Druckrollen (33.1, 33.2) an Federzungen (35.1, 35.2) gelagert sind.

2. Vorrichtung nach Anspruch 1, **dadurch gekennzeichnet, dass** der Transporteinrichtung (29.1, 29.2) eine Einrichtung zum Auslenken der Gegenstände (2) aus ihrer Transportbahn zugeordnet ist.

3. Vorrichtung nach einem der vorhergehenden Ansprüche, **dadurch gekennzeichnet, dass** die Transporteinrichtung ein Endlosriemen (29.1, 29.2) ist, der zumindest zwei Umlenkrollen (30.1, 30.2) umschlingt.

4. Vorrichtung nach Anspruch 3, **dadurch gekennzeichnet, dass** die Umlenkrollen (30.1, 30.2) parallel zur Vertikalachse des Gegenstandes (2) angeordnet sind.

5. Vorrichtung nach Anspruch 3 oder 4, **dadurch gekennzeichnet, dass** die Umlenkrollen (30.1, 30.2) kippbar sind.

6. Vorrichtung nach einem der vorhergehenden Ansprüche, **dadurch gekennzeichnet, dass** die Unterstützungsmittel oder Gleitebenen (32.1, 32.2) so getwistet sind, dass ein Führen der Gegenstände (2, 2.1) von einer hängenden in eine waagrechte oder auch in eine senkrechte Lage oder auch umgekehrt direkt möglich ist.

7. Vorrichtung nach Anspruch 1, **dadurch gekennzeichnet, dass** der Abstand (a) der Gleitebenen (32.1, 32.2) zueinander veränderbar ist.

8. Vorrichtung nach Anspruch 7, **dadurch gekennzeichnet, dass** die Gleitebenen (32.1, 32.2) Randkanten (24.1, 24.2) eines Gehäuseschlitzes (25) aufweisen, wobei das Gehäuse (22) aus zwei Gehäuseschalen (23.1, 23.2) zusammengesetzt ist.

9. Vorrichtung nach Anspruch 8, **dadurch gekennzeichnet, dass** die beiden Gehäuseschalen (23.1, 23.2) verschiebbar ineinander geführt sind.

10. Vorrichtung nach einem der Ansprüche 4 bis 9, **dadurch gekennzeichnet, dass** die Einrichtung zum Auslenken der Gegenstände aus zumindest einer zusätzlichen Gleitfläche (41) besteht, die in den Bereich der Transportbahn eingreift.

11. Vorrichtung nach einem der Ansprüche 6 bis 9, **dadurch gekennzeichnet, dass** die Einrichtung zum Auslenken der Gegenstände aus zwei Gleitebenen (32.1, 32.2) besteht, an denen sich die Profilierung (3) abstützt, wobei die beiden Gleitebenen (32.1, 32.2) bezogen auf die Transportebene zumindest bereichsweise in einer unterschiedlichen Ebene angeordnet sind und/oder unterschiedliche bzw. versetzte Neigungen aufweisen und/oder in kurvigen Bahnen und/oder getwistet geführt sind.

12. Vorrichtung nach einem der vorhergehenden Ansprüche, **dadurch gekennzeichnet, dass** den Gegenständen (2) ein Niederhalter (31) zugeordnet ist.

13. Verwendung einer Vorrichtung nach einem der vorhergehenden Ansprüche, **dadurch gekennzeichnet, dass** sie zur Zuführung von Vorformlingen (2) zu einer Streckblasmaschine verwendet wird.

14. Verwendung einer Vorrichtung nach einem der Ansprüche 1 bis 12, **dadurch gekennzeichnet, dass** sie nach einer Streckblasmaschine zur Weiterführung zu anderen Behandiungsmaschinen verwendet wird.

## Claims

1. A device for conveying objects having profiling, in particular bottles or preforms (2) with an annular collar (28), between supporting means or two sliding planes (32.1, 32.2) with the aid of at least one conveying means (21; 29.1, 29.2), at least one part (29.1, 29.2) of which lies in a frictional connection against the object (2), the part (29.1, 29.2) of the conveying means which lies in a frictional connection against the object (2) being resiliently mounted in that the conveying means (29.1, 29.2) are supported against spring-mounted pressure rolls (33.1, 33.2),
**characterised in that**
the pressure rolls (33.1, 33.2) are mounted on flexible tongues (35.1, 35.2).

2. A device according to Claim 1, **characterised in that** a means for deflecting the objects (2) out of their conveying path is associated with the conveying means (29.1, 29.2).

3. A device according to one of the preceding claims, **characterised in that** the conveying means is an endless belt (29.1, 29.2) which runs around at least two deflecting rolls (30.1, 30.2).

4. A device according to Claim 3, **characterised in that** the deflecting rolls (30.1, 30.2) are arranged parallel to the vertical axis of the object (2).

5. A device according to Claim 3 or 4, **characterised in that** the deflecting rolls (30.1, 30.2) can be tilted.

6. A device according to one of the preceding claims, **characterised in that** the supporting means or sliding planes (32.1, 32.2) are twisted such that it is directly possible to guide the objects (2, 2.1) from a suspended into a horizontal or alternatively into a vertical position or alternatively vice versa.

7. A device according to Claim 1, **characterised in that** the distance (a) of the sliding planes (32.1, 32.2) from one another can be altered.

8. A device according to Claim 7, **characterised in that** the sliding planes (32.1, 32.2) have marginal edges (24.1, 24,2) of a housing slot (25), the housing (22) being composed oftwo housing shells (23.1, 23.2).

9. A device according to Claim 8, **characterised in that** the two housing shells (23.1, 23.2) are guided displaceably in one another.

10. A device according to one of Claims 4 to 9, **characterised in that** the means for deflecting the objects consists of at least one additional sliding surface (41) which engages in the region of the conveyor.

11. A device according to one of Claims 6 to 9, **characterised in that** the means for deflecting the objects consists of two sliding planes (32.1, 32.2) on which the profiting (3) is supported, the two sliding planes (32.1, 32.2), relative to the conveying plane, being arranged at least in regions in a different plane and/or having different or offset inclinations and/or being guided in curved paths and/or in twisted manner.

12. A device according to one of the preceding claims, **characterised in that** a holding-down device (31) is associated with the objects (2).

13. Use of a device according to one of the preceding claims, **characterised in that** it is used for supplying preforms (2) to a stretch blow moulding machine.

14. Use of a device according to one of Claims 1 to 12, **characterised in that** it is used after a stretch blow moulding machine for forwarding to other processing machines.

## Revendications

1. Dispositif pour transporter des objets avec un profilage, en particulier de bouteilles ou de préformes (2) avec une collerette annulaire (28), entre des moyens de support ou deux plans de glissement (32.1, 32.2) à l'aide d'au moins un dispositif de transport (21; 29.1, 29.2) dont au moins une partie (29.1, 29.2) s'appuie en liaison de friction contre l'objet (2), la partie (29.1, 29.2) du dispositif de transport s'appuyant en liaison de friction contre l'objet (2) étant montée de manière élastique en ce que le dispositif de transport (29.1, 29.2) s'appuie contre des rouleaux de pression montés de manière élastique (33.1, 33.2),
**caractérisé par le fait**
**que** les rouleaux de pression (33.1, 33.2) sont montés sur des languettes élastiques (35.1, 35.2).

2. Dispositif selon la revendication 1, **caractérisé par le fait qu'**au dispositif de transport (29.1. 29.2) est associé un dispositif pour dévier les objets (2) hors de leur trajectoire de transport.

3. Dispositif selon l'une des revendications précédentes, **caractérisé par le fait que** le dispositif de transport est une courroie sans fin (29.1, 29.2) qui s'enlace autour d'au moins deux poulies de renvoi (30.1.30.2).

4. Dispositif selon la revendication 3, **caractérisé par le fait que** les poulies de renvoi (30.1, 30,2) sont disposées parallèles à l'axe vertical de l'objet (2).

5. Dispositif selon la revendication 3 ou 4, **caractérisé par le fait que** les poulies de renvoi (30.1, 30.2) sont basculantes.

6. Dispositif selon l'une des revendications précédentes, **caractérisé par le fait que** les moyens de support ou plans de glissement (32.1, 32.2) sont vrillés de sorte qu'un guidage des objets (2, 2.1) d'une position suspendue en une position horizontale ou également en une position verticale, ou inversement, soit directement possible.

7. Dispositif selon la revendication 1, **caractérisé par le fait que** la distance (a) entre les plans de glissement (32.1, 32.2) est variable.

8. Dispositif selon la revendication 7, **caractérisé par le fait que** les plans de glissement (32.1, 32.2) présentent des bords marginaux (24.1, 24.2) d'une fente de boîtier (25), le boîtier (22) étant composé de deux coquilles de boîtier (23.1, 23.2).

9. Dispositif selon la revendication 8, **caractérisé par le fait que** les deux coquilles de boîtier (23.1, 23.2) sont guidées de manière déplaçable l'une dans l'autre.

10. Dispositif selon l'une des revendications 4 à 9, **caractérisé par le fait que** le dispositif pour dévier les objets consiste en au moins une surface de glissement additionnelle (41) qui s'engage dans la zone de la trajectoire de transport.

11. Dispositif selon l'une des revendications 6 à 9, **caractérisé par le fait que** le dispositif pour dévier les objets se compose de deux plans de glissement (32.1, 32.2) sur lesquels s'appuie le profilage (3), les deux plans de glissement (32.1, 32.2) étant disposés, par rapport au plan de transport, au moins par zones dans un plan différent et/ou présentent des inclinaisons différentes ou décalées et/ou sont guidés selon des trajectoires courbes et/ou vrillées.

12. Dispositif selon l'une des revendications précédentes, **caractérisé par le fait qu'**aux objets (2) est associé un moyen d'abaissement (31).

13. Utilisation d'un dispositif selon l'une des revendications précédentes, **caractérisé par le fait qu'**il est utilisé pour l'amené de préformes (2) vers une machine de moulage par soufflage avec étirage.

14. Utilisation d'un dispositif selon l'une des revendications 1 à 12, **caractérisé par le fait qu'**il est utilisé, après une machine de moulage par soufflage avec étirage, pour l'amenée vers d'autres machines de traitement.
